Europäisches Patentamt

European Patent Office

Office européen des brevets

(19)

(11) EP 0 832 048 B1

## (12) FASCICULE DE BREVET EUROPEEN

(45) Date de publication et mention
de la délivrance du brevet:
**13.10.1999 Bulletin 1999/41**

(21) Numéro de dépôt: **96916204.9**

(22) Date de dépôt: **15.05.1996**

(51) Int Cl.6: **C04B 28/02**
// (C04B28/02, 14:06, 14:28, 24:12, 24:22)

(86) Numéro de dépôt international:
**PCT/FR96/00732**

(87) Numéro de publication internationale:
**WO 96/36577 (21.11.1996 Gazette 1996/51)**

(54) **PRODUIT NOUVEAU A BASE DE CIMENT ET PROCEDE DE MISE EN OEUVRE DE CE PRODUIT**

NEUES ZEMENTERZEUGNIS UND VERFAHREN ZU SEINEM HERSTELLUNG

NOVEL CEMENTITIOUS PRODUCT AND METHOD FOR PRODUCING SAME

(84) Etats contractants désignés:
**AT BE CH ES FR GR IT LI**

(30) Priorité: **19.05.1995 FR 9505960**

(43) Date de publication de la demande:
**01.04.1998 Bulletin 1998/14**

(73) Titulaire: **CIMENTS FRANCAIS
F-92800 Puteaux (FR)**

(72) Inventeur: **VERHILLE, Marcel
F-78200 Mantes-la-Ville (FR)**

(74) Mandataire: **Loyer, Bertrand
Cabinet Loyer,
78, avenue Raymond Poincaré
75116 Paris (FR)**

(56) Documents cités:
**WO-A-91/17126**    **DE-A- 2 412 352**
**DE-A- 3 238 390**    **US-A- 4 410 367**

- **DATABASE WPI Section Ch, Week 8225 Derwent Publications Ltd., London, GB; AN 82-51158E XP002000119 & JP 57 077 060 A (KUBOKO PAINT KK) , 14 Mai 1982**
- **BAUSTOFFINDUSTRIE TEIL B, vol. 19, Juin 1976, VERLAG BAUWESEN BERLIN DE, pages 6-8, XP002013977 DR HENNING O. ET AL: "Die Wirkung grenzflächenaktiver Zusatzmittel in der Anfangsphase der Hydratation von Portlandzementen."**

## Description

La présente invention a pour objet un produit nouveau à base de ciment et le procédé pour la mise en oeuvre de ce produit nouveau.

Il est connu dans l'industrie du ciment d'ajouter à la poudre de ciment des produits pulvérulents appelés fillers qui améliorent les caractéristiques physiques et mécaniques du ciment.

Ces produits, définis par la norme n° NF P15-301 et désignés par le terme de "filler", sont des produits siliceux ou calcaires ou encore des particules organiques comme les polymères de type styrène butadiène ou acétate de polyvinyle.

Il est précisé dans cette norme P15-301 qu'ils ne doivent pas excéder la proportion de 5% en masse.

Les poudres de ciment utilisés ont une granulométrie comprise, environ, entre 1 micron pour les plus fins et 160 microns pour les plus gros.

Les fillers minéraux ont des particules très fines comprises entre 0,10 micron et 10 microns avec une proportion de l'ordre de 10 à 20 % de particules inférieures au micron.

Les fillers organiques ont, eux, des dimensions de particules extrêmement fines pouvant aller jusqu'à 20 à 30 nanomètres (20 à 30 millièmes de microns).

La présente invention ne concerne pas uniquement les fillers minéraux et organiques mentionnés précédemment, mais également des ultrafins, c'est-à-dire ayant un diamètre compris entre 5 et 50 nanomètres.

D'autre part, comme cela sera expliqué ci-après, on pourra employer des produits ayant une granulométrie supérieure à celle des fillers définis ci-dessus, la condition essentielle étant qu'ils aient un diamètre au plus égal à celui des particules de ciment.

Il en résulte que dans ce qui va suivre, le terme "filler" désignera des produits pulvérulents, minéraux ou organiques, ayant un diamètre compris entre 5 manomètres pour les plus fins et 160 microns pour les plus gros.

Il est également connu, dans l'industrie cimentière d'améliorer ou de modifier les caractéristiques mécaniques ou rhéologiques d'un coulis de ciment ou d'un mortier aux moyens de produits appelés "adjuvants".

Par exemple, le document DERWENT AN:82-51158E, JP57077060 décrit l'ajout d'un filler constitué d'une suspension aqueuse d'une résine époxy, d'un durcisseur tel qu'une polyamine aliphatique et d'un additif tel qu'une mélamine sulfonée.

Dans le brevet français FR-A-2661669 (et publication internationale WO91/17126) du même demandeur, est décrit, à titre de produit nouveau, un adjuvant constitué par l'association d'un sel d'amine grasse et d'un agent tensioactif. Cet adjuvant a la propriété d'améliorer les caractéristiques de moulage d'un coulis de ciment ainsi adjuvanté.

Par l'expression "adjuvant cationique", on désigne les produits décrits dans le brevet FR-A-2661669, c'est-à-dire comportant : un sel d'amine grasse, un tensioactif et un antimousse.

Par l'expression "adjuvant anionique", on désigne un produit composé essentiellement d'un polymère anionique tel que ceux utilisés traditionnellement dans la technique des adjuvants du ciment (non tensioactif).

Les travaux de la demanderesse ont permis de découvrir que l'association d'un adjuvant cationique, comportant un sel d'amine grasse, présentait en présence de filler pulvérulent, dont les particules présentent un diamètre égal ou inférieur à celui des particules de ciment, un effet de synergie qui permet d'augmenter considérablement la proportion du filler par rapport au ciment tout en conservant de bonnes propriétés de résistances mécaniques.

Il faut en effet savoir qu'avec les moyens et adjuvants connus, il n'est pas possible d'incorporer plus de 20 % de filler à un ciment ; parce que, au-delà de cette proportion, les propriétés physiques et mécaniques du ciment sont détériorées.

Par contre, selon la présente invention, en employant une association d'un adjuvant cationique et d'un adjuvant anionique, il est possible d'incorporer jusqu'à 1.000 % de filler, c'est-à-dire 50 fois plus que la limite supérieure actuelle.

Il s'est avéré que l'on pouvait incorporer jusqu'à 50% de filler (éléments fins et ultrafins) dans un ciment sans modifier ni altérer ses propriétés physiques, mécaniques et chimiques.

Au-delà de la proportion de 50%, certaines propriétés, en particulier les propriétés mécaniques sont altérées mais l'effet des éléments fins et ultrafins permettent une meilleure résistance chimique notamment aux eaux agressives et aux éléments polluants.

Il est à noter que la proportion de l'additif adjuvant cationique plus adjuvant anionique doit être ajustée non pas en fonction du poids du ciment seul ; mais en fonction de l'ensemble ciment + filler fins et ultrafins.

Ainsi, par exemple :

- pour 100 g de ciment et 100 g de filler, il faut environ 2 g d'additif;
- pour 100 g de ciment et 700 g de filler, il faut environ 8 g d'additif.

D'une façon générale, la proportion en poids de l'additif constitué par l'association des deux adjuvants, l'un cationique et l'autre anionique devra être comprise entre 0,05 % et 5 %.

Les adjuvants cationiques sont des sels d'amine grasse tels que :

- un acétate, un oléate, un palmitate ou un stéarate d'amine,
- un sel d'amine propoxylé,
- un sel d'amine éthoxylé,
- un sel d'amine comportant une double chaîne alkylée, par exemple, dioctadécyldiméthylammonium (DODA)

Les adjuvants anioniques peuvent être les suivants :

- un naphtalène sulfoné formaldéhyde,
- un lignosulfonate,
- une mélamine sulfonée formaldéhyde,
- un copolymère acrylique,
- un copolymère vinylester,
- des saccharates ou carbohydrates de sodium,
- des acides carboxyliques.

Il est important de noter qu'a priori, pour un homme de métier, une telle association d'un adjuvant cationique et d'un adjuvant anionique est impossible parce que : l'adjuvant cationique est insoluble dans l'eau, hydrophobe et chargé positivement ; alors que l'adjuvant anionique est soluble dans l'eau, hydrophile et chargé négativement.

Dans la plupart des cas, il s'est avéré qu'il fallait d'abord mélanger l'agent cationique au filler de telle sorte que les particules de filler soit enrobées par l'agent cationique ; ce après quoi, on procédait au mélange du ciment et du filler ainsi enrobé ; puis on ajoutait l'eau ; puis on procédait au gâchage ; et ce n'était qu'à la fin du gâchage que l'on ajoutait l'adjuvant anionique.

Lorsque la proportion de filler par rapport au ciment est très importante, c'est-à-dire 300 % ou même 1.000 %, il est possible d'ajouter l'adjuvant anionique après le ciment dès le début du gâchage ; mais il est préférable de le faire en fin de gâchage.

On considère que l'adjuvant cationique présente une grande affinité avec le filler ; que l'adjuvant anionique présente une bonne affinité avec le ciment.

Il a été procédé à différents essais de substitution du ciment par du filler (étant rappelé que ce terme couvre non seulement des éléments ultra fins, mais aussi des éléments fins, la condition étant que les particules du filler doivent avoir un diamètre égal ou inférieur à celui des particules de ciment).

Les résultats de ces essais sont donnés dans les tableaux ci-après dans lesquels :

- la "formulation cationique est constituée d'un mélange, d'une part d'INOPOL 002 et 2 parts de NP6 (nonylphénol à 6 oxydes d'éthylène) avec addition d'un anti-moussant tel que AIRPLAST 251,
- l'adjuvant anionique est un naphtalène sulfoné formaldéhyde,
- le poids de l'ensemble ciment + filler est le même pour une série d'essai, l'eau étant ajustée pour avoir un étalement satisfaisant,
- la masse volumique est mesurée en kilo par décimètres cubes,
- la résistance à la compression est mesurée, selon l'usage, à 1 jour, 2 jours, 7 jours et 28 jours,
- l'étalement mesuré selon le test usuel qui consiste à mesurer l'étalement obtenu en remplissant un récipient tronconique ayant 100 mm de diamètre à la base, 70 mm de diamètre au sommet et 50 mm de hauteur. On pose ce volume tronconique sur une plaque métallique, on le remplit du produit à mesurer jusqu'au niveau supérieur, on soulève le récipient, on laisse le produit s'étaler et on mesure l'étalement maximum obtenu.

En outre, dans tous ces essais, l'adjuvant cationique a été additionné d'un agent anti-mousse ; le filler est soit un filler calcaire, soit un filler siliceux soit un filler organique, tel par exemple qu'un polymère anionique (Latex).

## ESSAIS I

Cette première série d'essais comprend quatre essais avec un coulis de ciment comportant 1.500 g de produit en proportions égales de ciment et de filler (750 g chacun). Le filler est un filler calcaire.

La première colonne (Essai I-1) concerne un essai avec un seul des deux adjuvants, l'adjuvant anionique, l'adjuvant cationique étant absent.

La deuxième colonne (Essai I-2) concerne un essai inverse avec seulement l'adjuvant cationique, l'adjuvant anionique étant absent.

Les troisième et quatrième colonnes (I-3 et I-4) concernent deux essais avec les deux adjuvants associés, mais dans des proportions différentes.

| ESSAIS I<br>Rapport Ciment/Filler = 1/1 | | | | |
|---|---|---|---|---|
| | 1 | 2 | 3 | 4 |
| ADJUVANT CATIONIQUE | | 15 | 7,5 | 9 |
| ADJUVANT ANIONIQUE | 15 | | mis en 7,5 fin de gâchage | mis en 6 fin de gâchage |
| EAU | 410 | 250 | 250 | 250 |
| CIMENT | 750 | 750 | 750 | 750 |
| FILLER (calcaire) | 750 | 750 | 750 | 750 |
| ETALEMENT (en mm) | 170 | 135 | 180 | 210 |
| MASSE VOLUMIQUE (kg/dm$^3$) | 2,00 | 1,91 | 2,13 | 2,17 |
| RESISTANCES A LA COMPRESSION en Mpa | | | | |
| 1 j. | 22 | 20 | 15 | 30 |
| 2 j. | 28 | 33 | 49 | 56 |
| 7 j. | 41 | 48 | 70 | 80 |
| 28 j. | 61 | 63 | 84 | 96 |

A l'examen de ces résultats, on voit que lorsqu'on emploie 50 % de filler, la résistance à la compression est faible, ce qui est en soi connu, et que l'emploi d'un adjuvant anionique seul, comme dans l'essai I-1, ou d'un adjuvant cationique seul, comme dans l'essai I-2 n'y change rien.

Par contre, l'essai I-3 montre que la résistance à la compression est beaucoup plus élevée dès le deuxième jour et l'essai I-4 montre une amélioration encore plus nette. A noter que dans les deux cas, l'adjuvant cationique est d'abord mélangé au filler, l'adjuvant anionique n'étant incorporé qu'en fin de gâchage.

L'effet de synergie de l'association d'un adjuvant cationique et d'un adjuvant anionique en présence d'un filler apparaît ainsi clairement.

ESSAIS II

Cette deuxième série d'essais est analogue à la première et comprend également quatre essais de coulis de ciment avec toujours 1.500 g de mélange ciment + filler ; mais cette fois la proportion de filler par rapport au ciment est de 300 % (375 g de ciment ; 1.125 g de filler). Le filler est un filler calcaire.

Les essais II-1, II-2 et II-3 correspondent aux essais I-1, I-2, I-3 respectivement. Dans l'essai II-4, la proportion d'adjuvant cationique par rapport à l'adjuvant anionique a été augmentée.

| ESSAIS II<br>Rapport Ciment/Filler = 1/3 | | | | |
|---|---|---|---|---|
| | 1 | 2 | 3 | 4 |
| ADJUVANT CATIONIQUE | | 15 | 7,5 | 12 |
| ADJUVANT ANIONIQUE | 15 | | 7,5 | 3 |
| EAU | 340 | 240 | 240 | 240 |
| CIMENT | 375 | 375 | 375 | 375 |
| FILLER (calcaire) | 1125 | 1125 | 1125 | 1125 |
| ETALEMENT<br>en mm | 145 | 170 | 145 | 220 |
| MASSE VOLUMIQUE<br>$(kg/dm^3)$ | 1,78 | 2,01 | 2,13 | 2,07 |
| RESISTANCES A LACOMPRESSION<br>en Mpa | | | | |
| 1 j. | 4 | 6 | 16 | 14 |
| 2 j. | 9 | 19 | 32 | 26 |
| 7 j. | 17 | 31 | 44 | 39 |
| 28 j. | 22 | 40 | 56 | 50 |

Là encore, l'effet de synergie apparaît clairement. En effet, les résistances à la compression sont faibles dans tous les cas, mais elles sont considérablement améliorées dans les cas II-3 et II-4 et cela alors que le coulis comporte 300 % de filler, ce qui est un résultat remarquable puisque l'on sait que selon l'état de la technique, on ne peut pas dépasser 20 %.

ESSAIS III

Cette troisième série d'essais est analogue aux deux premières. Elle ne comprend que trois essais qui correspondent aux essais I-1, II-2 puis I-2, II-2, le troisième essais II-3 correspondant à II-4.

| ESSAIS III<br>Rapport Ciment/Filler = 1/10 | | | |
|---|---|---|---|
| | 1 | 2 | 3 |
| ADJUVANT CATIONIQUE | | 15 | 12 |
| ADJUVANT ANIONIQUE | 15 | | 3 |

(suite)

| ESSAIS III Rapport Ciment/Filler = 1/10 | | | |
|---|---|---|---|
| | 1 | 2 | 3 |
| EAU | 330 | 250 | 250 |
| CIMENT | 136 | 136 | 136 |
| FILLER (calcaire) | 1364 | 1364 | 1364 |
| ETALEMENT en mm | 155 | 160 | 200 |
| MASSE VOLUMIQUE kg/dm$^3$ | 1,80 | 1,91 | 2,07 |
| RESISTANCES A LACOMPRESSION en Mpa | | | |
| 1 j. | 0 | 1 | 1,5 |
| 2 j. | 1 | 2 | 4 |
| 7 j. | 3 | 4 | 8 |
| 28 j. | 4 | 6 | 12 |

Là encore, l'effet de synergie apparaît clairement.

Les résistances à la compression sont quasiment nulles le premier jour ; au deuxième jour la résistance à la compression est dans l'essai III-3, respectivement le double et le quadruple des essais III-1 et III-2.

La résistance à 28 jours est de 12 Megapascal pour l'essai II-3, alors qu'elle n'est que de 4 et 6 dans les deux autres.

Il est à noter que cette résistance de 12 Mpa est celle requise par les sculpteurs ou restaurateurs qui emploie ce qu'on appelle "la pierre reconstituée" avec le double avantage que le produit est moins cher puisqu'il y a moins de ciment et qu'il sera plus résistant à l'usure du temps.

ESSAIS IV

Cette quatrième série d'essais concerne des essais de mortier, c'est-à-dire un mélange de ciment et de sable dans lequel le ciment utilisé comporte lui-même 50 % de filler.

La première colonne est celle du produit témoin réalisé selon la norme.

| ESSAIS IV Rapport Ciment/Filler = 1/1 | | | | |
|---|---|---|---|---|
| | TEMOIN | 1 | 2 | 3 |
| ADJUVANT CATIONIQUE | | | 6,9 | 6 |

(suite)

| | | TEMOIN | 1 | 2 | 3 |
|---|---|---|---|---|---|
| **ESSAIS IV** | | | | | |
| **Rapport Ciment/Filler = 1/1** | | | | | |
| ADJUVANT ANIONIQUE | | | | | mis en |
| | | | 6,9 | | 0,9 fin de gâchage |
| EAU | | 225 | 170 | 100 | 100 |
| CIMENT | | 450 | 225 | 225 | 225 |
| SABLE NORMALISE | | 1350 | 1350 | 1350 | 1350 |
| FILLER SILICEUX | | | 225 | 225 | 225 |
| ETALEMENT | flow test en mm | 145 | 130 | 140 | 130 |
| MASSE VOLUMIQUE | kg/dm$^3$ | 2,21 | 2,23 | 2,25 | 2,27 |
| RESISTANCES A LA COMPRESSION | en Mpa | | | | |
| | 1 j. | 13 | 8 | 6 | 28 |
| | 2 j. | 25 | 20 | 30 | 41 |
| | 7 j. | 40 | 33 | 45 | 51 |
| | 28 j. | 58 | 38 | 57 | 64 |

En examinant les résultats figurant à ce tableau, on voit que les mesures d'étalement, de densité et de résistance sont sensiblement les mêmes pour les essais IV-1 et IV-2 que pour le témoin ; mais que par contre l'essai IV-3 montre une amélioration considérable de la résistance à la compression et donc met en lumière l'effet de synergie de l'association des deux adjuvants.

A noter que pour que les essais soient comparables, on a employé 6,9 g d'adjuvant dans tous les cas, soit dans l'essai IV-1, 6,9 g d'adjuvant anionique, dans l'essai IV-2, 6,9 g d'adjuvant cationique et dans l'essai IV-3, 6 g de l'un et 0,9 g de l'autre.

A noter également que dans cette série d'essais, le filler employé n'est plus un filler calcaire. Il s'est avéré qu'il était nécessaire avec un filler siliceux d'augmenter considérablement la proportion d'adjuvant cationique pour obtenir un bon enrobage préalable des particules de filler et cette augmentation a eu pour effet que l'adjuvant anionique n'a été introduit qu'en fin de gâchage.

Les essais auxquels il a été procédé montrent donc qu'en associant un adjuvant cationique et un adjuvant anionique, on obtient un double résultat : d'une part on réussit à incorporer des quantités beaucoup plus importantes de filler à un ciment et d'autre part, on obtient un effet de synergie en ce qui concerne la résistance du coulis de ciment ou du mortier ainsi réalisé.

Le tableau suivant montre que l'on obtient un troisième résultat, étroitement lié aux deux premiers, à savoir que cet effet de synergie augmente lorsque la proportion de filler augmente, ce qui est très surprenant.

Dans ce tableau : les résistances obtenues avec l'adjuvant anionique sont notées "Ra" ; celles obtenues avec l'adjuvant cationiques sont notées "Rc" ; la moyenne est notée "Rm" ; celles obtenues par l'association des deux, à effet de synergie, sont notées Rs.

Comme on le voit, Rs est non seulement toujours supérieur à Rm, mais encore l'écart entre Rs et Rm croît au fur et à mesure que la proportion de filler croît.

| Tableau récapitulatif Ciment/Filler Résistances à la compression au bout de 7 jours | | | | |
|---|---|---|---|---|
| $\frac{Ciment}{Filler}$ | | $\frac{75}{25}$ | $\frac{50}{50}$ | $\frac{25}{75}$ |
| ADJUVANT ANIONIQUE | | | | |
| | Ra | 69 | 41 | 16 |
| ADJUVANT CATIONIQUE | | | | |
| | Rc | 73 | 48 | 32 |
| MOYENNE $\frac{Ra + Rc}{2}$ | Rm | 71 | 44,5 | 24 |
| ADJUVANT CATIONIQUE + ADJUVANT ANIONIQUE | Rs | 100 | 70 | 44 |

Il est à noter que l'adjuvant cationique peut-être incorporé au moment du broyage du clinker au cours de la fabrication du ciment. Il s'avère d'ailleurs que dans ce cas l'adjuvant cationique fait office d'agent de mouture.

## Revendications

1. Produit à base de ciment, caractérisé par le fait qu'il est constitué par un mélange de ciment et de filler pulvérulent, dont les particules présentent un diamètre égal ou inférieur à celui des particules de ciment, mélange auquel est incorporée une association d'un adjuvant anionique et d'un adjuvant cationique comprenant un sel d'amine grasse.

2. Produit selon la revendication 1, dans lequel la proportion de filler par rapport au ciment est supérieure à 20 %.

3. Produit selon la revendication 2, dans lequel la proportion de filler par rapport au ciment est comprise entre 20% et 1.000 %.

4. Produit selon l'une quelconque des revendications 1 à 3, dans lequel le filler est un produit pulvérulent minéral ou organique dont les particules ont un diamètre compris entre 5 nanomètres et 160 microns, les particules les plus grosses devant avoir un diamètre égal ou inférieur à celui des particules de ciment.

5. Produit selon l'une quelconque des revendications 1 à 4, dans lequel l'adjuvant cationique comporte un sel d'amine grasse tel que :

   - un acétate, un oléate, un palmitate ou un stéarate d'amine,
   - un sel d'amine propoxylé,
   - un sel d'amine éthoxylé,
   - un sel d'amine comportant une double chaîne alkylée, par exemple D.O.D.A.

6. Produit selon l'une quelconque des revendications 1 à 4, dans lequel l'adjuvant anionique est :

   - un naphtalène sulfoné formaldéhyde,
   - un lignosulfonate,
   - une mélamine sulfonée formaldéhyde,
   - un naphtalène sulfoné formaldéhyde,
   - un copolymère acrylique,
   - un copolymère vinylester,
   - des saccharates ou carbohydrates de sodium,
   - des acides carboxyliques.

**7.** Produit selon l'une quelconque des revendications 1 à 6, dans lequel la proportion en poids de l'association "adjuvant cationique + adjuvant anionique" est comprise entre 0,05 % et 5 % de l'ensemble "ciment + filler".

**8.** Produit selon l'une quelconque des revendications 1 à 7, dans lequel l'adjuvant cationique est avantageusement additionné d'un agent anti-mousse.

**9.** Produit selon l'une quelconque des revendications 1 à 8, dans lequel le filler est un filler calcaire.

**10.** Produit selon l'une quelconque des revendications 1 à 8, dans lequel le filler est un filler siliceux.

**11.** Produit selon l'une quelconque des revendications 1 à 8, dans lequel le filler est un polymère anionique tel que du latex.

**12.** Produit selon la revendication 9, qui est un coulis comportant :

- ciment : 50 %
- filler calcaire : 50 %
- eau : 16,66 % du poids total ciment + filler
- adjuvant cationique : 0,5 % du poids total ciment + filler,
- adjuvant anionique : 0,5 % du poids total ciment + filler.

**13.** Produit selon la revendication 9, qui est un coulis comportant :

- ciment 50 %
- filler calcaire 50 %
- eau : 16,66 % du poids total ciment + filler,
- adjuvant cationique : 0,6 % du poids total ciment + filler,
- adjuvant anionique : 0,4 % du poids total ciment + filler.

**14.** Produit selon la revendication 9, qui est un coulis comportant :

- ciment 25 %
- filler calcaire 75 %
- eau 16 % du poids total ciment + filler
- adjuvant cationique 0,5 % du poids total ciment + filler
- adjuvant anionique 0,5 % du poids total ciment + filler.

**15.** Produit selon la revendication 9, qui est un coulis comportant :

- ciment 25 %
- filler 75 %
- eau 16 % du poids total ciment + filler
- adjuvant cationique 0,8 % du poids total ciment + filler
- adjuvant anionique 0,2 % du poids total ciment + filler.

**16.** Produit selon la revendication 9, qui est un coulis comportant :

- ciment 9 %
- filler 90 %
- eau 16,6 % du poids total ciment + filler
- adjuvant cationique 0,8 % du poids total ciment + filler
- adjuvant anionique 0,2 % du poids total ciment + filler.

**17.** Produit selon la revendication 10, qui est un mortier au sable comprenant :

- ciment 12,5 %
- filler 12,5 %
- sable 75 %

- eau 5,5 %
- adjuvant cationique 0,3 %
- adjuvant anionique 0,05 %

Ces pourcentages étant donnés par rapport au poids total de l'ensemble ciment + filler + sable.

18. Procédé pour la réalisation du produit selon les revendications 1 à 17 comprenant du ciment, du filler, un adjuvant cationique et un adjuvant anionique selon lequel : on mélange d'abord l'adjuvant cationique avec le filler afin d'enrober les particules de filler avec ledit adjuvant cationique ; puis on mélange le filler ainsi enrobé et le ciment ; puis on ajoute de l'eau pour commencer le gâchage ; et enfin, on ajoute l'adjuvant anionique en fin de gâchage.

19. Procédé pour la réalisation du produit selon les revendications 1 à 17, comprenant du ciment, du filler, un adjuvant cationique et un adjuvant anionique selon lequel l'adjuvant cationique est incorporé au moment du broyage du clinker au cours de la fabrication du ciment.

20. Procédé selon la revendication 19, dans lequel l'adjuvant cationique fait office d'agent de mouture.

**Patentansprüche**

1. Produkt auf Zementbasis, das dadurch gekennzeichnet ist, daß es aus einem Gemisch aus Zement und pulverförmigem Füllstoff gebildet ist, dessen Teilchen einen Durchmesser aufweisen, der gleich dem der Zementteilchen oder kleiner ist, wobei in dem Gemisch eine Assoziation aus einem anionischen Zusatzstoff und einem kationischen Zusatzstoff, der ein Fettaminsalz umfaßt, enthalten ist.

2. Produkt nach Anspruch 1, bei dem der Anteil des Füllstoffs in bezug auf den Zement mehr als 20 % beträgt.

3. Produkt nach Anspruch 2, bei dem der Anteil des Füllstoffs in bezug auf den Zement zwischen 20 % und 1000 % liegt.

4. Produkt nach einem der Ansprüche 1 bis 3, bei dem der Füllstoff ein pulverförmiges, mineralisches oder organisches Produkt ist, dessen Teilchen einen Durchmesser zwischen 5 Nanometer und 160 Mikrometer aufweisen, wobei die größten Teilchen einen Durchmesser haben müssen, der gleich dem der Zementteilchen oder kleiner ist.

5. Produkt nach einem der Ansprüche 1 bis 4, bei dem der kationische Zusatzstoff ein Fettaminsalz umfaßt, wie z. B.:

   - ein Aminoacetat, -oleat, -palmitat oder -stearat,
   - ein propoxyliertes Aminsalz,
   - ein ethoxyliertes Aminsalz,
   - ein Aminsalz mit doppelten Alkylketten, z. B. DODA.

6. Produkt nach einem der Ansprüche 1 bis 4, wobei es sich bei dem anionischen Zusatzstoff um

   - einen sulfonierten Naphthalinformaldehyd,
   - ein Lignosulfonat,
   - einen sulfonierten Melaminformaldehyd,
   - einen sulfonierten Naphthalinformaldehyd,
   - ein Acrylcopolymer,
   - ein Vinylestercopolymer,
   - Natriumsaccharate oder -kohlenhydrate,
   - Carbonsäuren

   handelt.

7. Produkt nach einem der Ansprüche 1 bis 6, bei dem der Gewichtsanteil der Assoziation "kationischer Zusatzstoff + anionischer Zusatzstoff" zwischen 0,05 % und 5 % der Gesamtheit "Zement + Füllstoff' liegt.

8. Produkt nach einem der Ansprüche 1 bis 7, bei dem der kationische Zusatzstoff vorzugsweise mit einem Schaumverhütungsmittel versetzt ist.

9. Produkt nach einem der Ansprüche 1 bis 8, bei dem der Füllstoff ein kalkhaltiger Füllstoff ist.

10. Produkt nach einem der Ansprüche 1 bis 8, bei dem der Füllstoff ein siliziumhaltiger Füllstoff ist.

11. Produkt nach einem der Ansprüche 1 bis 8, bei dem der Füllstoff ein anionisches Polymer, wie z. B. Latex, ist.

12. Produkt nach Anspruch 9, bei dem es sich um einen Brei handelt, der folgendes umfaßt:

   - Zement: 50 %
   - kalkhaltiger Füllstoff: 50 %
   - Wasser: 16,66 % des Gesamtgewichtes von Zement + Füllstoff
   - kationischer Zusatzstoff: 0,5 % des Gesamtgewichtes von Zement + Füllstoff,
   - anionischer Zusatzstoff: 0,5 % des Gesamtgewichtes von Zement + Füllstoff.

13. Produkt nach Anspruch 9, bei dem es sich um einen Brei folgender Zusammensetzung handelt:

   - Zement: 50 %
   - kalkhatiger Füllstoff: 50 %
   - Wasser: 16,66 % des Gesamtgewichtes von Zement und Füllstoff,
   - kationischer Zusatzstoff: 0,6 % des Gesamtgewichtes von Zement + Füllstoff,
   - anionischer Zusatzstoff: 0,4 % des Gesamtgewichtes von Zement + Füllstoff.

14. Produkt nach Anspruch 9, bei dem es sich um einen Brei folgender Zusammensetzung handelt:

   - Zement: 25 %
   - kalkhaltiger Füllstoff: 75 %
   - Wasser: 16 % des Gesamtgewichtes von Zement + Füllstoff
   - kationischer Zusatzstoff: 0,5 % des Gesamtgewichtes von Zement + Füllstoff
   - anionischer Zusatzstoff: 0,5 % des Gesamtgewichtes von Zement + Füllstoff.

15. Produkt nach Anspruch 9, bei dem es sich um einen Brei handelt, der folgendes umfaßt:

   - Zement: 25 %
   - Füllstoff: 75 %
   - Wasser: 16 % des Gesamtgewichtes von Zement + Füllstoff
   - kationischer Zusatzstoff: 0,8 % des Gesamtgewichtes von Zement + Füllstoff
   - anionischer Zusatzstoff: 0,2 % des Gesamtgewichtes von Zement + Füllstoff.

16. Produkt nach Anspruch 9, bei dem es sich um einen Brei folgender Zusammensetzung handelt:

   - Zement: 9 %
   - Füllstoff: 90 %
   - Wasser: 16,6 % des Gesamtgewichtes von Zement + Füllstoff
   - kationischer Zusatzstoff: 0,8 % des Gesamtgewichtes von Zement + Füllstoff
   - anionischer Zusatzstoff: 0,2 % des Gesamtgewichtes von Zement + Füllstoff.

17. Produkt nach Anspruch 10, bei dem es sich um einen Sandmörtel handelt, der folgendes umfaßt:

   - Zement: 12,5 %
   - Füllstoff: 12,5 %
   - Sand: 75 %
   - Wasser: 5,5 %
   - kationischer Zusatzstoff: 0,3 %
   - anionischer Zusatzstoff: 0,05 %,

wobei diese prozentualen Anteile in bezug auf das Gesamtgewicht von Zement + Füllstoff + Sand angegeben sind.

**18.** Verfahren zur Herstellung des Produktes nach den Ansprüchen 1 bis 17, das Zement, Füllstoff, einen kationischen Zusatzstoff und einen anionischen Zusatzstoff umfaßt, wobei man zunächst den kationischen Zusatzstoff mit dem Füllstoff vermischt, um die Füllstoffteilchen mit dem kationischen Zusatzstoff zu umhüllen, anschließend den so umhüllten Füllstoff und den Zement vermischt; dann Wasser zugibt, um mit dem Anrühren zu beginnen, und schließlich am Ende des Anrührens den anionischen Zusatzstoff zugibt.

**19.** Verfahren zur Herstellung des Produktes nach den Ansprüchen 1 bis 17, das Zement, Füllstoff, einen kationischen Zusatzstoff und einen anionischen Zusatzstoff umfaßt, wobei der kationische Zusatzstoff zum Zeitpunkt des Zermahlens des Klinkers während der Herstellung des Zementes zugesetzt wird.

**20.** Verfahren nach Anspruch 19, bei dem der kationische Zusatzstoff als Mahlhilfsmittel dient.

**Claims**

**1.** Cement-based product, characterized in that it consists of a mixture of cement and powdered filler, the particles of which have a diameter equal to or less than that of the cement particles, a mixture in which is incorporated an association of an anionic admixture and a cationic admixture comprising a fatty amine salt.

**2.** Product according to claim 1, wherein the proportion of filler with respect to cement is greater than 20 %.

**3.** Product according to claim 1, wherein the proportion of filler with respect to cement lies between 20 % and 1000 %.

**4.** Product according to any one of claims 1 to 3, wherein the filler is an inorganic or organic powdered product of which the particles have a diameter of between 5 nanometres and 160 microns, and of which the largest particles must have a diameter equal to or less than that of the cement particles.

**5.** Product according to any one of claims 1 to 4, wherein the cationic admixture comprises a fatty amine salt such as:

- an amine acetate, oleate, palmitate or stearate,
- a propoxylated amine salt,
- an ethoxylated amine salt,
- an amine salt having a double alkylated chain, for example D.O.D.A.

**6.** Product according to any one of claims 1 to 4, wherein the anionic admixture is:

- a sulfonated naphthalene formaldehyde,
- a lignosulfonate,
- a sulfonated melamine formaldehyde,
- an acrylic copolymer,
- a vinylester copolymer,
- sodium saccharates or carbohydrates,
- carboxylic acids.

**7.** Product according to any one of claims 1 to 6, wherein the proportion by weight of the association "cationic admixture + anionic admixture" lies between 0.05 % and 5 % of the "cement + filler" combination.

**8.** Product according to any one of claims 1 to 7, wherein an anti-foam agent is advantageously added to the cationic admixture.

**9.** Product according to any one of claims 1 to 8, wherein the filler is a calcareous filler.

**10.** Product according to any one of claims 1 to 8, wherein the filler is a siliceous filler.

**11.** Product according to any one of claims 1 to 8, wherein the filler is an anionic polymer such as a latex.

**12.** Product according to claim 9, which is a slurry comprising:

- cement : 50 %
- calcareous filler : 50 %
- water : 16.66 % of the total cement + filler weight
- cationic admixture : 0.5 % of the total cement + filler weight
- anionic admixture : 0.5 % of the total cement + filler weight.

13. Product according to claim 9, which is a slurry comprising:

- cement : 50 %
- calcareous filler : 50 %
- water : 16.66 % of the total cement + filler weight
- cationic admixture : 0.6 % of the total cement + filler weight
- anionic admixture : 0.4 % of the total cement + filler weight.

14. Product according to claim 9, which is a slurry comprising:

- cement : 25 %
- calcareous filler : 75 %
- water : 16 % of the total cement + filler weight
- cationic admixture : 0.5 % of the total cement + filler weight
- anionic admixture : 0.5 % of the total cement + filler weight.

15. Product according to claim 9, which is a slurry comprising:

- cement : 25 %
- filler : 75 %
- water : 16 % of the total cement + filler weight
- cationic admixture : 0.8 % of the total cement + filler weight
- anionic admixture : 0.2 % of the total cement + filler weight.

16. Product according to claim 9, which is a slurry comprising:

- cement : 9 %
- filler : 90 %
- water : 16.6 % of the total cement + filler weight
- cationic admixture : 0.8 % of the total cement + filler weight
- anionic admixture : 0.2 % of the total cement + filler weight.

17. Product according to claim 10, which is a sand mortar comprising:

- cement 12.5 %
- filler 12.5 %
- sand 75 %
- water 5.5 %
- cationic admixture 0.3 %
- anionic admixture 0.05 %,

these percentages being given with respect to the total of the cement + filler + sand combination.

18. Process for preparing the product according to claims 1 to 17 comprising cement, filler, a cationic admixture and an anionic admixture according to which : the cationic admixture is first of all mixed with the filler in order to coat the particles of filler with the said cationic admixture; the filler thus coated is then mixed with the cement; water is then added to start preparing the batch; and finally the anionic admixture is added at the end of the batch preparation.

19. Process for preparing the product according to claims 1 to 17 comprising cement, filler, a cationic admixture and an anionic admixture, according to which the cationic admixture is incorporated at the moment the clinker is ground during manufacture of the cement.

**20.** Process according to claim 19, wherein the cationic admixture acts as a grinding agent.